Europäisches Patentamt

**(19)** European Patent Office

Office européen des brevets

**(11)** Publication number : **0 318 413 B1**

**(12)** EUROPEAN PATENT SPECIFICATION

**(45)** Date of publication of patent specification :
22.07.92 Bulletin 92/30

**(51)** Int. Cl.⁵ : **F01N 3/28**

**(21)** Application number : **88630117.5**

**(22)** Date of filing : **30.06.88**

**(54) Catalytic conversion system.**

**(30)** Priority : **23.11.87 US 124325**

**(43)** Date of publication of application :
**31.05.89 Bulletin 89/22**

**(45)** Publication of the grant of the patent :
**22.07.92 Bulletin 92/30**

**(84)** Designated Contracting States :
**DE FR GB IT SE**

**(56)** References cited :
EP-A- 0 273 850
WO-A-87/03646
WO-A-89/02978
DE-A- 2 843 365
FR-A- 781 601
US-A- 3 953 176
SAE 861554

**(73)** Proprietor : **UNITED TECHNOLOGIES CORPORATION**
**United Technologies Building 1, Financial Plaza**
**Hartford, CT 06101 (US)**

**(72)** Inventor : **Presz, Walter Michael, Jr.**
**40 Grove Street**
**Wilbraham Massachusetts 01905 (US)**
Inventor : **Paterson, Robert William**
**4 Pinecrest Drive**
**Simsbury Connecticut 06070 (US)**
Inventor : **Werle, Michael Joseph**
**4 Porter Drive**
**West Hartford, Connecticut 06117 (US)**
Inventor : **Ealba, Robert Herman**
**136 Moran Road**
**Grosse Pointe Farms Michigan 48236 (US)**

**(74)** Representative : **Weydert, Robert et al**
**OFFICE DENNEMEYER S.à.r.l. P.O. Box 1502**
**L-1015 Luxembourg (LU)**

## Description

This invention relates to catalytic conversion system having a diffuser between a delivery conduit and a receiving conduit.

Diffusers are well known in the art. Webster's New Collegiate Dictionary (1981) defines diffusers as "a device for reducing the velocity and increasing the static pressure of a fluid passing through a system". The present invention is concerned with the most typical of diffusers, those having an inlet cross-sectional flow area less than their outlet cross-sectional flow area. While a diffuser may be used specifically for the purpose of reducing fluid velocity or increasing fluid pressure, often they are used simply because of a physical requirement to increase the cross-sectional flow area of a passage, such an to connect pipes of different diameters.

As hereinafter used in this specification and appended claims, "diffuser" shall mean a fluid carrying passage which has an inlet cross-sectional flow area less than its outlet cross-sectional flow area, and which decreases the velocity of the fluid in the principal flow direction and increases its static pressure.

If the walls of the diffuser are too steep relative to the principal flow direction, streamwise, two-dimensional boundary layer separation may occur. Streamwise, two-dimensional boundary layer separation, as used in this specification and appended claims, means the breaking loose of the bulk fluid from the surface of a body, resulting in flow near the wall moving in a direction opposite the bulk fluid flow direction. Such separation results in high losses, low pressure recovery, and lower velocity reduction. When this happens the diffuser is said to have stalled. Stall occurs in diffusers when the momentum in the boundary layer cannot overcome the increase in pressure as it travels downstream along the wall, at which point the flow velocity near the wall actually reverses direction. From that point on the boundary layer cannot stay attached to the wall and a separation region downstream thereof is created.

To prevent stall a diffuser may have to be made longer so as to decrease the required diffusion angle; however, a longer diffusion length may not be acceptable in certain applications due to space or weight limitations, for example, and will not solve the problem in all circumstances. It is, therefore, highly desirable to be able to diffuse more rapidly (i.e., in a shorter distance) without stall or, conversely, to be able to diffuse to a greater cross-sectional flow area for a given diffuser length than in presently possible with diffusers of the prior art.

Diffusers of the prior art may be either two- or three-dimensional. Two-dimensional diffusers are typically four sided, with two opposing sides being parallel to each other and the other two opposing sides diverging from each other toward the diffuser outlet. Conical and annular diffusers are also sometimes referred to as two-dimensional diffusers. Annular diffusers are often used in gas turbine engines. A three-dimensional diffuser can for example, be four sided, with both pairs of opposed sides diverging from each other.

The catalytic converter system for automobiles, trucks and the like reduces exhaust emissions (nitrous oxides) and to oxidize carbon monoxide and unburned hydrocarbons. The catalyst of choice is presently platinum. Because platinum is so expensive it is important to utilize it efficiently, which means exposing a high surface area of platinum to the gases and having the residence time sufficiently long to do an acceptable job using the smallest amount of catalyst possible.

Currently the exhaust gases are carried to the converter in a cylindrical pipe or conduit having a cross sectional flow area of between about 2.5 - 5.0 square inches. The catalyst (in the form of a platinum coated ceramic monolith or a bed of coated ceramic pellets) is disposed within a conduit having, for example, an elliptical cross sectional flow area two to four times that of the circular inlet conduit. The inlet conduit and the catalyst containing conduit are joined by a diffusing section which transitions from circular to elliptical. Due to space limitations the diffusing section is very short; and its divergence half-angle may be as much as 45 degrees. Since flow separates from the wall when the half-angle exceeds about 7.0 degrees, the exhaust flow from the inlet pipe tends to remain a cylinder and, for the most part, impinges upon only a small portion of the elliptical inlet area of the catalyst. Due to this poor diffusion within the diffusing section there is uneven flow through the catalyst bed. These problems are discussed in a paper titled, Visualization of Automotive Catalytic Converter Internal Flows by Daniel W. Wendland and William R. Matthes, SAE paper No. 861554 presented at the International Fuels and Lubricants Meeting and Exposition, Philadelphia, Pennsylvania, October 6 - 9, 1986. It is desired to be able to better diffuse the flow within such short lengths of diffusing section in order to make more efficient use of the platinum catalyst there thereby reduce the required amount of catalyst. A catalytic conversion system of the type referred to in the precharacterizing portion of independent claim 1 is disclosed in WO89/02978. The known conversion system has a plurality of individual flow passages of increasing cross-sectional flow area in the diffuser section.

The object of the present invention is to provide a catalytic conversion system having improved operating characteristics and which can accomplish the same amount of diffusion in a shorter length than that of the prior art or achieve greater diffusion for a given length than prior art diffusers.

In accordance with the present invention, to achieve this, there is provided a catalytic conversion system including a gas delivery conduit having an outlet of first cross-sectional flow area, a receiving conduit having an inlet of second cross-sectional flow area larger than said first cross-sectional flow area and spaced downstream of said delivery conduit outlet and including a catalyst bed disposed therein, and an intermediate conduit defining a diffuser having a flow surface connecting said outlet to said inlet, characterized in that said diffuser flow surface includes a plurality of downstream extending alternating, adjoining U-shaped troughs and ridges forming a smoothly undulating portion of said flow surface, said undulating portion terminating as a wave-shaped outlet edge, said troughs and ridges initiating with zero depth and height at said delivery conduit outlet and increasing in depth and height to a maximum at said wave-shaped edge, and said troughs and ridges being sized and contoured such that each trough generates a pair of large-scale counterrotating vortices, each vortex rotating about an axis extending substantially in the downstream direction, and that at said wave-shaped edge there is a step-wise increase in cross-sectional flow area and said wave-shaped outlet edge is spaced upstream from said catalyst bed.

More specifically, the troughs and ridges initiate at a point upstream of where separation from the wall surface would occur during operation of the diffuser, defining an undulating surface portion of the diffuser wall. If the troughs and ridges extend to the diffuser outlet, the diffuser wall will terminate in a wave-shape, as viewed looking upstream. In cases where a steep diffuser wall becomes less steep downstream such that separation over the downstream portion is no longer a problem, the troughs and ridges can be terminated before the outlet. There may also be other reasons for not extending the troughs and ridges to the outlet.

It is believed that the troughs and ridges delay or prevent the catastrophic effect of streamwise two-dimensional boundary layer separation by providing three-dimensional relief for the low momentum boundary layer flow. The local flow area variations created by the troughs and ridges produce local control of pressure gradients and allow the boundary layer approaching an adverse pressure gradient region to move laterally instead of separating from the wall surface. It is believed that as the boundary layer flows downstream and encounters a ridge, it thins out along the top of the ridge and picks up lateral momentum on either side of the peak of the ridge toward the troughs. In corresponding fashion, the boundary layer flowing into the trough is able to pick up lateral momentum and move laterally on the walls of the trough on either side thereof. The net result is the elimination (or at least the delay) of two-dimensional boundary layer separation because the boundary layer is able to run around the pressure rise as it moves downstream. The entire scale of the mechanism is believed to be inviscid in nature and not tied directly to the scale of the boundary layer itself.

To have the desired effect of delaying or preventing stall, it is believed that the maximum depth of the trough (i.e., the peak to peak wave amplitude) will need to be at least about twice the 99% boundary layer thickness immediately upstream of the troughs. Considerably greater wave amplitudes are expected to work better. The wave amplitude and shape which minimizes losses is most preferred.

The present invention may be used with virtually any type of two or three dimensional diffusers. Furthermore, the diffusers of the present invention may be either subsonic or supersonic. If supersonic, the troughs and ridges will most likely be located downstream of the expected shock plane, but may also cross the shock plane to alleviate separation losses caused by the shock itself.

The foregoing and other features and advantages of the present invention will become more apparent in the light of the following detailed description of preferred embodiments thereof as illustrated in the accompanying drawing, wherein:

Fig. 1 is a simplified cross-sectional view of a two-dimensional diffuser.

Fig. 2 is a view taken generally in the direction 2-2 of Fig. 1.

Fig. 3 is a simplified, cross-sectional view of a three-dimensional diffuser.

Fig. 4 is a view taken in the direction 3-3 of Fig. 3.

Fig. 5 is a simplified cross-sectional view of an axisymmetric diffuser

Fig. 6 is a view taken in the direction 6-6 of Fig. 5.

Fig. 7 is a simplified cross-sectional view of an annular, axisymmetric diffuser.

Fig. 8 is a partial view taken in the direction 8-8 of Fig. 7.

Fig. 9 is a cross-sectional view of a step diffuser.

Fig. 10 is a view taken generally in the direction 10-10 of Fig. 9.

Fig. 11 is a schematic, sectional view representing apparatus used to test one embodiment of the diffuser.

Fig. 12 is a view taken generally along the line 12-12 of Fig. 11.

Fig. 13 is a schematic, sectional view representing apparatus used to test another embodiment of the diffuser

Fig. 14 is a view taken generally along the line 14-14 of Fig. 13.

Fig. 15 and 17 are schematic, sectional views representing apparatus for testing prior art configurations, for comparison purposes.

Fig. 16 is a view taken generally along the line 16-16 of Fig. 15.

Fig. 18 is a view taken generally along the line 18-18 of Fig. 17.

Fig. 19 is a graph displaying the results of tests for the embodiment shown in Figs. 11 and 12 as well as the prior art.

Fig. 20 is a perspective view of a catalytic converter system according to one embodiment of the present invention.

Fig. 21 is a sectional view taken generally in the direction 21 - 21 of Fig. 20.

Fig. 22 is a view taken generally in the direction 22 - 22 of Fig. 21.

Figs. 23 - 25 are graphs for comparing the coefficient of performance of the diffuser of Figs. 13 and 14 to that of prior art configurations shown in Figs. 15 - 18.

Fig. 26 is a cross-sectional illustrative view of an alternate construction for a catalytic converter, according to another embodiment of the present invention.

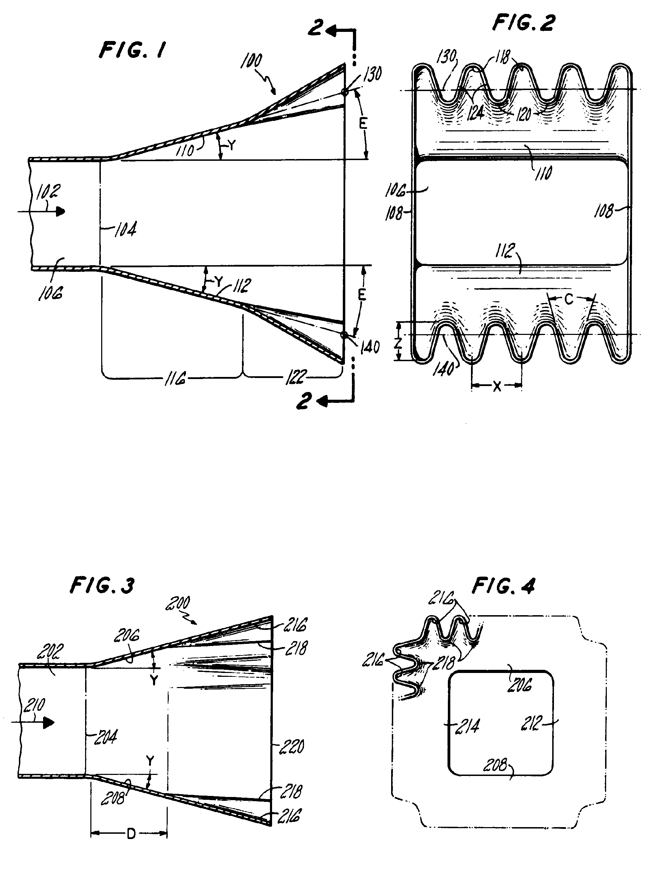

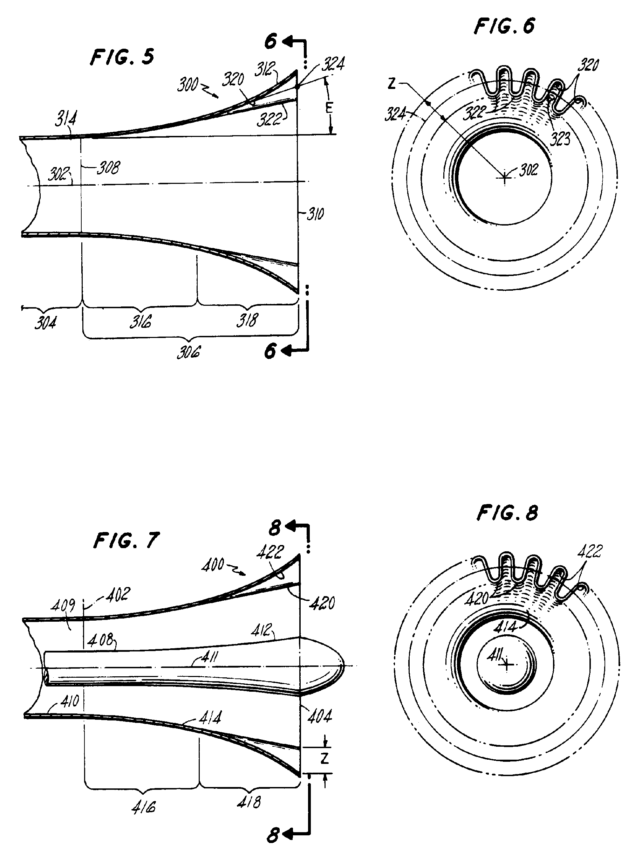

Referring to Figs. 1 - 2, an improved diffuser 100 is shown. In this embodiment the diffuser is a two-dimensional diffuser. Fluid flowing in a principal flow direction represented by the arrow 102 enters the inlet 104 of the diffuser from a flow passage 106. The diffuser 100 includes a pair of parallel, spaced apart sidewalls 108 extending in the principal flow direction, and upper and lower diverging walls 110, 112, respectively. The outlet of the diffuser is designated by the reference numeral 114. The walls 110, 112 are flat over the initial upstream portion 116 of their length. Each of these flat portions diverge from the principal flow direction by an angle herein designated by the letter Y. The remaining downstream portion 122 of each wall 110, 112 includes a plurality of downstream extending, alternating, adjoining troughs 118 and ridges 120. The ridges and troughs are basically "U" shaped in cross section and blend smoothly with each other along their length to form a smooth wave shape at the diffuser outlet 114. The troughs and ridges thereby form an undulating surface extending over the downstream portion 122 of the diffuser 100. In this embodiment the troughs and ridges also blend smoothly with the flat upstream wall portions 116 and increase in depth or height (as the case may be) toward the outlet 114 to a final wave amplitude (i.e., trough depth) Z. Although not the case in this embodiment, it may be preferable to have the sidewalls 124 parallel to each other (see Fig. 6). One constraint on the design of the troughs and ridges is that they must be sized and oriented such that the diffuser continues to increase in cross-sectional area from its inlet to its outlet.

For purposes of explanation, it is assumed that if the flat wall portions 116 were extended further downstream to the plane of the diffuser outlet 114 at the same angle Y, the diffuser would have an outlet area $A_o$, but would stall just downstream of the plane where the undulating surface is shown to begin. In this embodiment the undulations prevent such stall without changing the outlet area $A_o$. Thus, the bottoms of the troughs 118 are disposed on one side of imaginary extensions of the wall portions 116; and the peaks of the ridges are on the other side, such that the same outlet area $A_o$ is obtained.

Of course, depending upon the initial angle Y, the permissible length of the diffuser, and the shape and size of the undulations, it may be possible to make the outlet area even greater than $A_o$. The size of the outlet area is a matter of choice, depending upon need, the limitations of the present invention, and any other constraints imposed upon the system.

As used hereinafter, the "effective diffuser outlet boundary line" is herein defined as a smooth, non-wavy imaginary line in the plane of the diffuser outlet 114, which passes through the troughs and ridges to define or encompass a cross-sectional area that is the same as the actual cross-sectional area at the diffuser outlet. In the embodiment of Figs. 1 - 2 there are two such lines; and they are the phantom lines designated by the reference numerals 130 and 140. Additionally, the "effective diffusion angle" E for the undulating surface portion of the diffuser is that angle formed between a) a straight line connecting the diffuser wall at the beginning of the undulations to the "effective diffuser outlet boundary line" and b) the principal flow direction. In accordance with the present invention it is possible to contour and size the ridges and troughs such that streamwise two-dimensional boundary layer separation does not occur at "effective diffusion angles" greater than would otherwise be possible for the same diffuser length. Thus, in accordance with the present invention, the undulations in the diffuser walls permit diffusers to be designed with either greater area ratios for the same diffusing length, or shorter diffusing lengths for the same area ratio.

In designing a diffuser according to the present invention, the troughs and ridges (undulations) must initiate upstream of the point where boundary layer separation from the walls would be otherwise expected to occur. They could, of course, extend over the entire length of the diffuser, however that is not likely to be required. Although, in the embodiment of Figs. 1 and 2, the ridges are identical in size and shape to the troughs (except they are inverted), this is also not a requirement. It is also not required that adjacent troughs (or ridges) be the same.

To have the desired effect of preventing boundary layer separation, it is believed the maximum depth of the troughs (the peak-to-peak wave amplitude Z) will need to be at least twice the 99% boundary layer thickness immediately forward of the upstream ends of the troughs. It is believed that best results will be obtained when the maximum wave amplitude Z is about the size of the thickness (perpendicular to the principal flow direction and to the surface of the diffuser) of the separation region (i.e., wake) which would be expected to occur without the use of the troughs and ridges. If X is the dintance between adjacent troughs (i.e,, "wavelength") at the location of their maximum amplitude Z (usually at the diffuser outlet), the ratio of X to Z is preferably no greater than about 4,0 and no less than about 0.5. In general, if the amplitude Z is too small and or X is too large in relation thereto, stall may only be delayed, rather than eliminated. On the other hand, if Z is too great relative to X and/or the troughs are too narrow, viscous losses could negate some or all of the benefits of the invention. The present invention is intended to encompass any size troughs and ridges which provide improvement over the prior art.

Figs. 11 and 12 are a schematic representation of a rig used to test an embodiment of the diffuser similar to that shown in Figs. 1 and 2. The rig comprised a rectangular cross section entrance section 600 having a height H of 137.1 mm (5.4 inches)and a width W of 535.9 mm (21.1 inches). The entrance section 600 was followed by a diffusing section 602 having an inlet 604 and an outlet 606. The sidewalls 608 of the rig were parallel. The upper and lower diffusing section walls 610, 612 were hinged at 616, 618, respectively, to the downstream end of the upper and lower flat, parallel walls 619, 621 of the entrance section 600. Each wall 610, 612 included a flat upstream portion 613, 615, respectively, of length $L_1$ equal to 38.1 mm (1.5 inches), and a convoluted portion of length $L_2$ equal to 718.8 mm (28.3 inches). The phantom lines 620, 622 of Fig. 11 represent an imaginary plane wherein the cross sectional flow area of the troughs on one side of the plane is equal to the flow area of the troughs on the other side. In other words, the angle θ between the downstream direction and each plane 620, 622 is the average or effective diffusion half-angle of the convoluted wall diffuser. In this test the planes 620, 622 were parallel to their respective upstream straight wall portions 613, 615, although that is not a requirement of the invention. θ was varied from test to test, thereby changing the diffuser outlet to inlet area ratio $A_o/A_i$.

The trough and ridge configuration and dimensions of the test apparatus are best described with reference to Fig. 12. Each trough had substantially parallel sidewalls spaced apart a distance B of 40.6 mm (1.6 inches). The ridges were 1,66 times the width of the troughs (dimension A equaled 67.5 mm (2.66 inches)). Thus, the wave length (A + B) was 108.2 mm (4.26 inches) and was constant over the full length of the convolutions. The wave amplitude Z at the downstream end of the convolutions was 121.9 mm (4.8 inches) and tapered down to zero mm (inches).

Although not shown in the drawing, also tested, for comparison purposes, was a straight walled two-dimensional diffuser having a length equal to the sum of $L_1$ plus $L_2$.

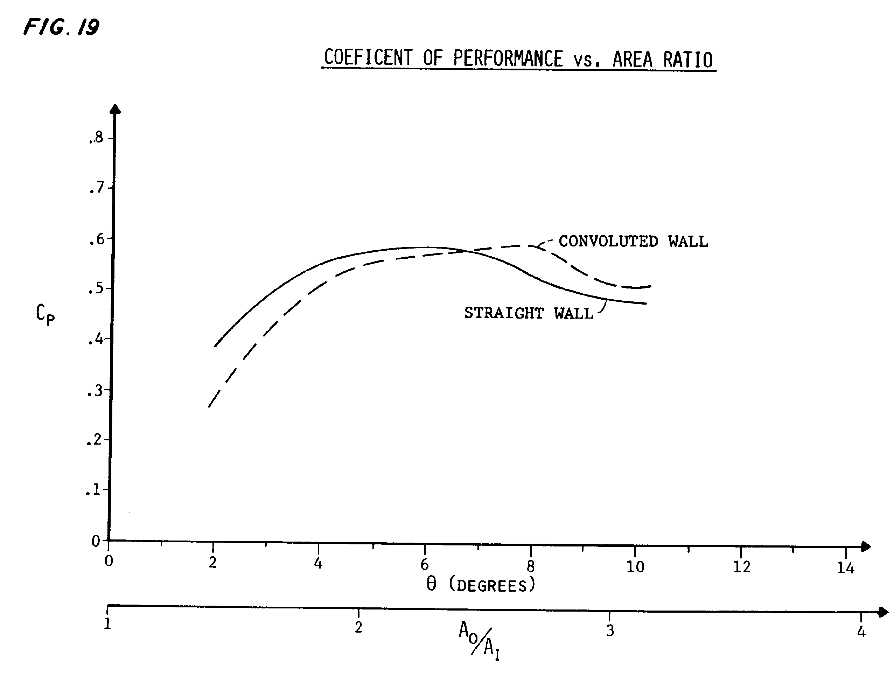

Fig. 19 is a graph of the test results for both the straight walled and convoluted two-dimensional diffusers. The co-efficient of performance $C_p$ is plotted on the vertical axis. The ratio of outlet to inlet area is plotted on the horizontal axis. Co-efficient of performance is defined as:

$$C_p = \frac{P_o - P_i}{\frac{1}{2}(rV_i^2)}$$

where $P_o$ is the static pressure at the diffuser outlet; $P_i$ is the static pressure at the diffuser inlet; r is the fluid density; and $V_i$ is the fluid velocity at the diffuser inlet.

In these tests air was the fluid and the angle θ was varied between two (2) degrees and 10 degrees for the straight walled diffuser and for the convoluted walled diffuser. As shown in the graph, the straight walled diffuser performs better than the convoluted walled diffuser up to an angle of about six (6) degrees. The convoluted wall configuration has considerably lower static pressure recovery at the small divergence angles due to the increase in the surface area of the system and not because it fails to prevent boundary layer separation. Boundary layer separation on the straight wall occurs at an angle of about six (6.0) degrees. At that point the coefficient of performance $C_p$ for the straight wall begins to fall off. For the convoluted wall configuration the coefficient of performance continues to climb past six (6.0) degrees up to an angle of eight (8) degrees. At higher angles separation occurs, as indicated by the fall off in coefficient of performance. The test data therefore indicates that the convoluted wall configuration delays separation by two (2) degrees relative to the straight walled configuration. Although the maximum $C_p$ remains the same for both configurations (about 0.58), the convoluted configuration results in a 19% larger outlet area before separation. Thus, through the continuity equation, the 19% area increase produces an average diffuser outlet velocity 19% less than that obtained with the straight walled configuration. This is a significant reduction in velocity.

From these results the conclusion can be drawn that the present invention is most useful at larger diffusion angles where boundary layer separation is a problem. Note, however, that in this particular test separation from the straight walled diffuser occurs at an area ratio where $C_p$ is barely increasing with increasing area ratio. If separation from a straight walled diffuser occurs at an area ratio where $C_p$ is increasing rapidly with increasing area ratio, then a small increase in area ratio without separation will result in a significant improvement in $C_p$

as well as a velocity reduction. It should also be pointed out that the size and shape of the troughs and ridges used in this test were not optimized. Only a single configuration was used throughout the tests. Convolutions of a different configuration may result in improved performance at the lower divergence angles without necessarily detracting from the performance at the higher divergence angles.

A three-dimensional diffuser 200 is shown in Figs. 3 and 4. The inlet passage 202 is of constant rectangular cross-section over its length. At the diffuser inlet 204, upper and lower walls 206, 208, respectively, each diverge from the principal flow direction 210 by an angle Y; and diffuser side walls 212, 214 also diverge from the principal flow direction at the same angle. The walls 206, 208, 212 and 214 are flat for a distance D downstream of the diffuser inlet 204, and then each is formed into a plurality of downntream extending, adjoining, alternate troughs 216 and ridges 218, which blend smoothly with each other along their length to the diffuser outlet 220. The upstream ends of the troughs and ridges also blend smoothly with the respective flat wall portions 206, 208, 212, 214. The troughs increase gradually in depth in the downstream direction from substantially zero to a maximum depth at the diffuser outlet 220. The undulating surfaces formed by the troughs and ridges terminate at the diffuser outlet as a smooth wave shape.

In Figs. 5 and 6 there is shown an axisymmetric diffuser herein designated by the reference numeral 300. The diffuser has an axis 302, a cylindrical inlet passage 304 and a diffuser section 306. The diffuser section inlet is designated by the reference numeral 308, and the outlet by the reference numeral 310. An upstream portion 316 of the diffuser section 306 is simply a curved, surface of revolution about the axis 302 which is tangent to the wall 314 at the inlet 308. The remaining downstream portion 318 is an undulating surface of circumferentially spaced apart adjoining troughs and ridges 320, 322, respectively, each of which initiates and blends smoothly with the downstream end of the diffuser upstream portion 316 and extends downstream to the outlet 310. The troughs and ridges gradually increase in depth and height, respectively, from zero to a maximum at the outlet 310. In this embodiment the sidewalls 323 of each trough are parallel to each other. The effective diffuser outlet boundary line is designated by the reference numeral 324 which defines a circle having the same cross-sectional area as the cross-sectional area of the diffuser at the outlet 310. The effective diffusion angle E is shown in Fig. 5.

Assuming that no boundary layer separation occurs along the surface of the upstream portion 316 of the diffuser, the troughs and ridges of the present invention allow greater diffusion than would otherwise be possible for the same diffuser axial length but using a diffuser of the prior art, such as if the downstream portion 318 of the diffuser were a segment of a cone or some other surface of revolution about the axis 302.

For purposes of sizing and spacing the troughs and ridges of axisymmetric diffusers using the guidelines hereinable set forth for the two-dimensional diffuser of Figs. 1 and 2, the wave amplitude Z for the axisymmetric diffusers is measured along a radial line, and the wavelength X will be an average of the radially outermost peak-to-peak arc length and the radially innermost peak-to-peak arc length.

With reference to Figs. 7 and 8, an annular, axisymmetric diffuser is generally represented by the reference numeral 400. The plane of the diffuser inlet is designated by the reference numeral 402 and the plane of the outlet is designated by the reference numeral 404. Concentric, cylindrical inner and outer wall surfaces 408, 410 upstream of the diffuser inlet plane 402 define an annular flow passage 409 which carries fluid into the diffuner. The inner wall 412 of the diffuser is a surface of revolution about the axis 411. The outer wall 414 of the diffuser includes an upstream portion 416 and a downstream portion 418. The upstream portion 416 is a surface of revolution about the axis 411. The downstream portion 418 is an undulating surface comprised of downntream extending, alternating ridges 420 and troughs 422, each of which are substantially U-shaped in cross section taken perpendicular to the principal flow direction. The walls of the troughs and ridges smoothly join each other along their length to create a smoothly undulating surface around the entire circumferential extent of the diffuser. The smooth wave-shape of the outer wall 414 at the diffuser outlet 404 can be seen in Fig. 8.

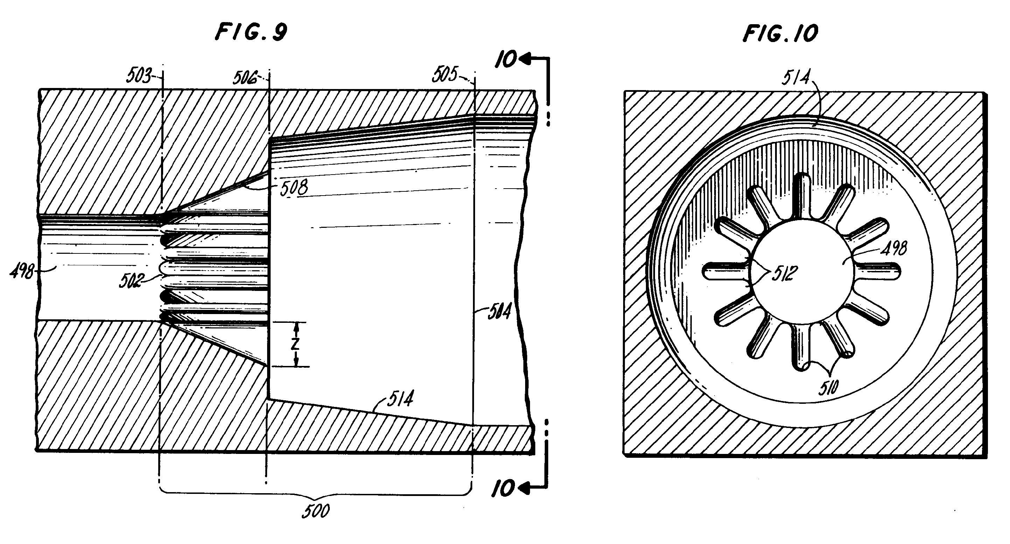

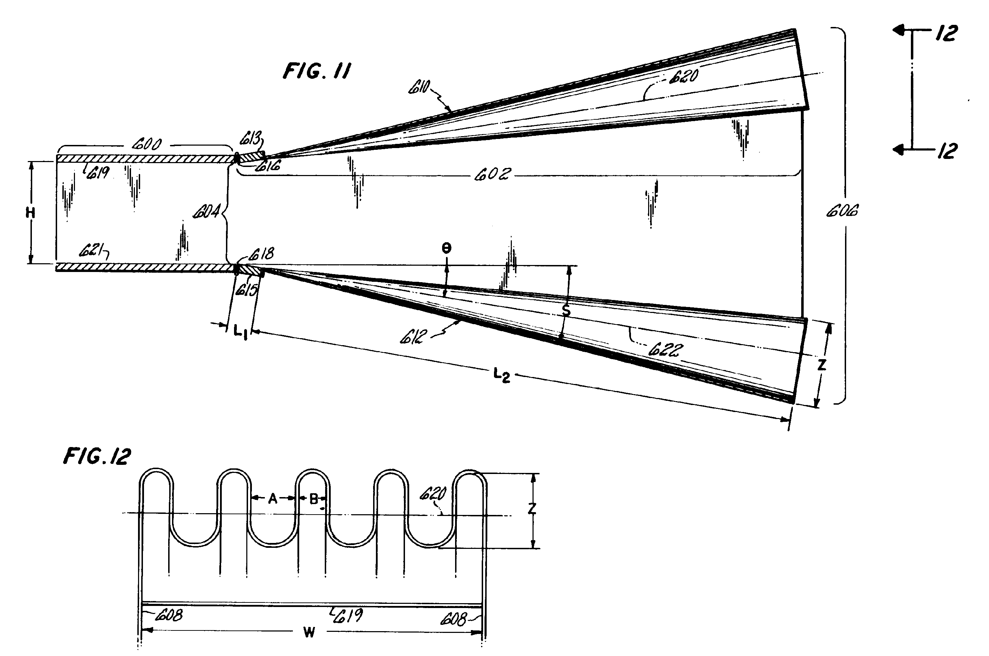

In the embodiment of Figs. 9 and 10, a constant diameter passage 498 carries fluid to a diffuser 500 having an inlet 502 (in a plane 503) and an outlet 504 (in a plane 505). The inlet 502 has a first diameter, and the outlet 504 has a second diameter larger than the first diameter. A step change in the passage cross-sectional area occurs at the plane 506; and the passage thereafter continues to increase in diameter to the outlet 504. The diameter remains constant downstream of the plane 505. The diffuser wall 508 upstream of the plane 506 has a plurality of U-shaped, circumferentially spaced apart troughs and ridges 510, 512, respectively, formed therein, extending in a downstream direction and increasing in depth and height to a maximum "amplitude" Z at the plane 506. The troughs are designed to flow full. The flow thereby stays attached to the walls 508 up to the plane 506. While some losses will occur at the plane 506 and for a short distance downstream thereof due to the discontinuity, the troughs and ridges create a flow pattern immediately downstream of the plane 506 which significantly reduces such losses, probably by directing fluid radially outwardly in a more rapid manner than would otherwise occur at such a discontinuity. The flow then reattaches to the diffuser wall 514 (which has a shallow diffusion angle) a short distance downstream of the discontinuity, and stays attached to the diffuser outlet 504.

As discussed in EP-A-0 273 850 it is believed each trough generates a single, large-scale axial vortex from each sidewall surface thereof at the trough outlet. By "large-scale" it is meant the vortices have a diameter about the size of the overall trough depth. These two vortices (one from each sidewall) rotate in opposite directions and create a flow field which tends to cause fluid from the trough and also from the nearby bulk fluid to move radially outwardly into the "corner" created by the step change in the passage cross-sectional area. The net effect of these phenomenon is to reduce the size of the low pressure region or stagnation zone in the corner. The flow thus reattaches itself to the wall 514 a shorter distance downstream from the plane 506 then would otherwise occur if, for example, the diffuser section between the planes 503 and 506 was simply smooth walled and frustoconical in shape.

In order that the vortex generated off of the side edge of one outlet is not interfered with by a counterrotating vortex generated off the side edge of the next adjacent trough it is necessary that the side edges of adjacent trough outlets be spaced apart by a sufficient distance. In general, the downstream projection of the area of the solid material between the side edges of adjacent troughs should be at least about one quarter (1/4) of the downstream projected outlet area of a trough.

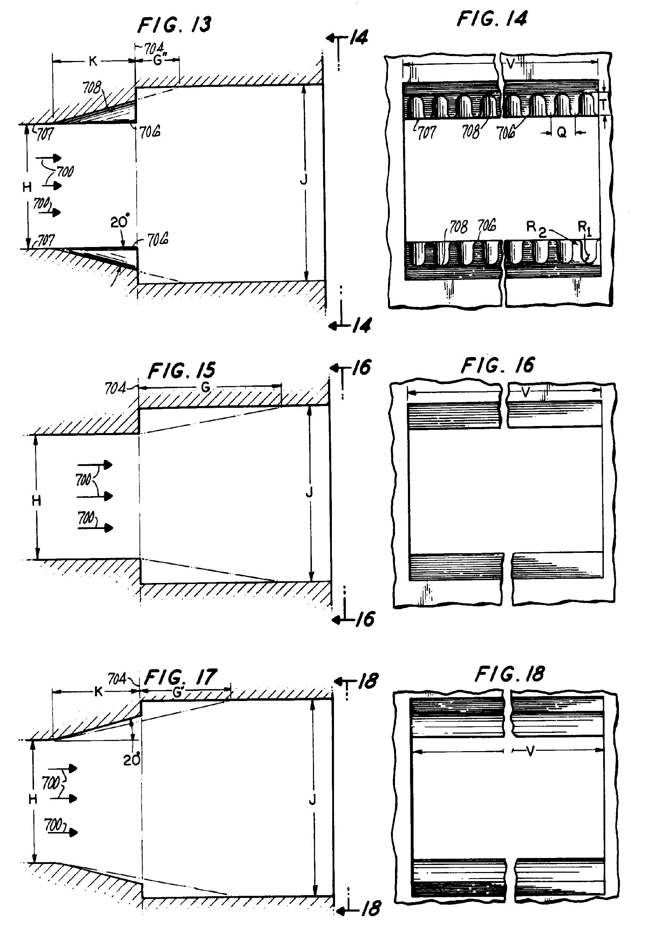

It is further believed that best results are obtained when the sidewall surfaces at the outlet are steep. Preferably, in a cross-section perpendicular to the downstream direction, which is the direction of trough length, lines tangent to the steepest points along the side edges should form an included angle C (shown for reference purposes in Fig. 2) of no greater than about 120°. The closer angle C is to zero degrees, the better. In the embodiments of Figs. 6, 8, and 10, an well as the embodiment of Fig. 14, the included angle is essentially zero degrees.

A two-dimensional stepped diffuser embodying the features of the axisymmetric stepped diffuser of Figs. 9 and 10 was tested in a rig shown schematically in Figs. 13 and 14. The tests were conducted with air as the working fluid. The principal flow direction or downstream direction is represented by the arrows 700. Convoluted diffusion sections 702 were incorporated into the duct wall and had their outlets in the plane 704 of a discontinuity, which is where the duct height dimension increased suddenly. The peaks 706 of the ridges were parallel to the downstream direction 700 and aligned with the entrance section walls 707. The bottoms 708 of the troughs formed an angle of 20 degrees with the downstream direction. The peak to peak wave amplitude T was 25.4 mm (1.0 inch). The wave length Q was 27.9 mm (1.1 inches). The trough radius $R_1$ was 8.2 mm (.325 inch) and the ridge radius $R_2$ was 4.4 mm (0.175 inch). The trough sidewalls were parallel to each other.

In this test the height J of the rectangular conduit portion downstream of the plane 704 was varied between 190.5 mm (7.5 inches) and 241.3 mm (9.5 inches). The height H of the entrance section was fixed at 136.5 mm (5.375 inches). The width V of the conduit was a constant 535.9 mm (21.1 inches) over its entire length. The length K of the convoluted diffusion section was 94.7 mm (3.73 inches).

For comparison purposes the rig was also run with no transitional diffusion section upstream of the plane 704 of the discontinuity. This test configuration is shown in Figs. 15 and 16. Also, as shown in Figs. 17 and 18, the tests were run with a simple flat or straight diffusing wall section immediately upstream of the plane 704. This straight diffusing section had a diffusion half-angle of 20° and length K the same as the convoluted section.

For each height dimension J at which a test was run the distance downstream of the plane 704 where flow reattached itself to the duct wall was measured. This distance is designated G″ for the test configuration of Fig. 13; G for the test configuration shown in Fig. 15; and G′ for the test configuration shown in Fig. 17. The data for these measurements may be compared by referring to the following table, in which all entries are in mm (inches):

## TABLE: FLOW REATTACHMENT MEASUREMENTS

| H | V | K | J |
|---|---|---|---|
| 136.5 (5.375) | 535.9 (21.1) | 94.7 (3.73) | 190.5 (7.5) |
| " | " | " | 203.2 (8.0) |
| " | " | " | 215.9 (8.5) |
| " | " | " | 228.6 (9.0) |
| " | " | " | 241.3 (9.5) |

| J/H | G | G' | G'' |
|---|---|---|---|
| 1.40 | 152.4 (6.0) | 114.3 (4.5) | 50.8 (2.0) |
| 1.49 | 208.2 (8.2) | 152.4 (6.0) | 76.2 (3.0) |
| 1.58 | 279.4 (11.0) | 190.5 (7.5) | 111.7 (4.4) |
| 1.67 | 355.6 (14.0) | 228.6 (9.0) | 152.4 (6.0) |
| 1.76 | 381 (15.0) | 254 (10.0) | 228.6 (9.0) |

The quantities G and G'' were determined by observing flow directions of tufts attached to the diffuser walls and were recorded at the time of best. The G' entries are estimates obtained after the tests based on coefficient of performance data and recollection of tuft flow patterns. The table shown that the convoluted configuration (G'' data) produced the shortest region of separation and therefore improved diffuser flow patterns relative to either the Figure 15 and 16 or Figure 17 and 18 configurations.

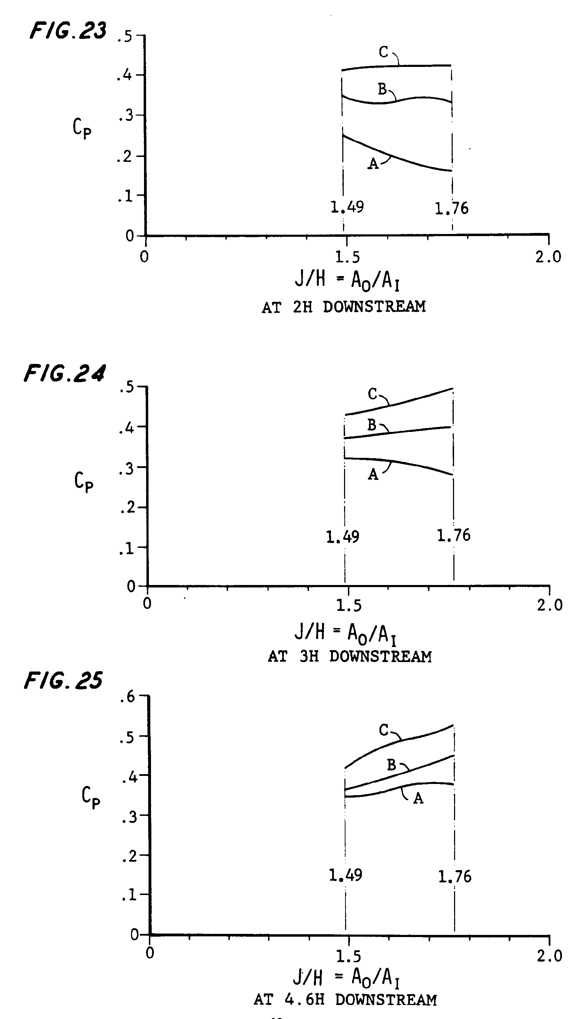

Measurements were also taken during these tests to enable calculating the coefficient of performance $P_c$ for each different conduit height J. That data is displayed in the graphs of Figs. 23 - 25, where the vertical axis represents the performance coefficient and the horizontal axis is the ratio of outlet area to inlet area (J/H). The graph of Fig. 23 displays results measured 2H downstream of the plane 704; the graph of Fig. 24 displays results 3H downstream of the plane 704; and Fig. 25 displays results measured 4.6H downstream. The results for each wall configuration (i.e., no diffusion section upstream of plane 704, or configuration A; straight walled diffusion section, or configuration B; and convoluted diffusion section, or configuration C) is shown in each graph.

The poorest performing configuration in all cases is configuration A (Figs. 15 and 16). The next best performing configuration is the straight diffusing wall section (configuration B) shown in Figs. 17 and 18. The highest performing configuration in all cases is the convoluted design, shown in Figs. 13 and 14. Note that at 4.6H downstream (Fig. 25) all configurations were approaching their maximum $C_p$. At that location, an depending on the outlet to inlet area ratio, the percentage improvement in $C_p$ ranged between about 17% and 38% relative to configuration A (no diffuser) and between about 13% and 19% relative to configuration B (straight walled diffuser).

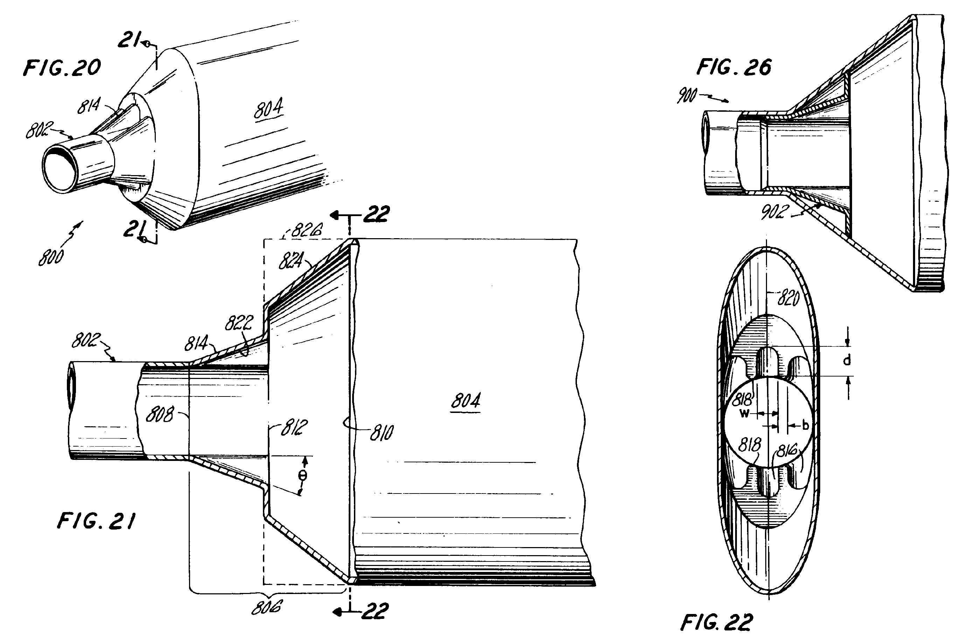

Figs. 20 - 22 show a catalytic converter system, such as for an automobile, which utilizes the present invention. The converter system is generally represented by the reference numeral 800. The converter system 800 comprises a cylindrical gas delivery conduit 802, an elliptical gas receiving conduit 804, and a diffuser 806 providing a transition duct or conduit between them. The diffuser 806 extends from the circular outlet 808 of the delivery conduit to the elliptical inlet 810 of the receiving conduit. The receiving conduit holds the catalyst bed. The catalyst bed is a honeycomb monolith with the honeycomb cells being parallel to the downstream direction. The inlet face of the monolith is at the inlet 810; however, it could be moved further downstream to allow additional diffusion distance between the trough outlets and the catalyst. Catalysts for catalytic converters are well known in the art. The configuration of the catalyst bed is not considered to be a part of the present invention.

As best seen in Fig. 22, in this embodiment diffusion occurs only in the direction of the major axis of the ellipse. The minor axis of the ellipse remains a constant length equivalent to the diameter of the delivery conduit outlet 808. In a sense, the diffuser 806 of this embodiment is effectively a two-dimensional diffuser. There is a step change in the diffuser cross sectional area at the plane 812. The diffuser wall 814 upstream of the plane 812 includes a plurality of U-shaped, downstream extending, adjoining alternating troughs 816 and ridges 818 formed therein defining a smoothly undulating surface. The troughs initiate in the plane of the outlet 808 with zero depth and increase in depth gradually to a maximum depth at their outlets at the plane 812, thereby forming a wave-shaped edge in the plane 812, as best shown in Fig. 22. The peaks 818 are parallel to the downstream direction and substantially aligned with the inside surface of the delivery conduit, although this is not a requirement of the present invention. Since diffusion takes place only in the direction of the major axis 820 of the elliptical inlet 810, the depth dimension of the troughs is made substantially parallel to that axis. The contour and size of the troughs and peaks are selected to avoid any two-dimensional boundary layer separation on their surface.

As discussed in the Background Art portion of the specification, a basic problem confronting automotive type catalytic converters of the prior art has been the requirement to obtain a large amount of diffusion in a short distance. However, it is known that the flow cannot remain attached to a smooth walled diffuser for half-angles much greater than about 6°. Using the apparatus shown in Figs. 11 and 12, tests have shown the ability to avoid two-dimensional boundary layer separation up to a trough slope (S in Fig. 11) of about 22°, which, in the test configuration, was equivalent to a smooth walled diffuser half-angle (i.e., effective diffusion angle) of about 8.0°. It is believed that under appropriate conditions the trough slope can be increased even more without boundary layer separation; however, the effective diffusion angle probably cannot by increased to much greater than about 10°. In the catalytic converter application trough slopes of less than about 5° will probably not be able to generate vortices of sufficient strength to significantly influence additional diffusion downstream of the trough outlets.

In this catalytic converter application the stepwise increase in cross-sectional area at the trough outlet plane 812 provides volume for the exhaust flow to diffuse into prior to reaching the face of the catalyst, which in this embodiment is at the outlet 810. The distance between the trough outlets and the catalyst face will play an important role in determining the extent of diffusion of the exhaust gases by the time they reach the catalyst; however, the best distance will depend on many factors, including self imposed system constraints. Some experimentation will be required to achieve optimum results. In any event, the present invention should make it possible to reduce the total amount of catalyst required to do the job.

In this embodiment the external wall 824 of the diffuser downstream of the trough outlets has an increasing elliptical cross sectional flow area. It would probably make little difference if the wall 824 had a constant elliptical cross-sectional flow area equivalent to its maximum outlet cross-sectional flow area since, near the major axis of the ellipse, there is not likely to be any reattachment of the flow to the wall surface even in the configuration shown. Such a constant cross-section wall configuration is represented by the phantom lines 826. In that case, the diffuser 806 would be considered to have terminated immediately downstream of the plane of the trough outlets 812; however, the catalyst face is still spaced downstream of the trough outlets to permit the exhaust gases to further diffuse before they enter the catalyst bed.

In the catalytic converter system of Figs. 20 - 22, the exhaust gas delivery conduit is circular in cross section and the receiving conduit 804 is elliptical because this is what is currently used in the automotive industry. Clearly they could both be circular in cross section; and the converter system would then look more like the diffuser system shown in Figs. 9 and 10. The specific shapes of the delivery and receiving conduits are not intended to be limiting to the present invention. In the embodiment shown the delivery conduit 802 has a diameter of 0.8 mm (2.0 inches); the length of the diffuser 806 is 81.2 mm (3.2 inches); the trough slop $\theta$ is 20° the trough downstream length is 40.6 mm (1.6 inches); and the slope of the wall 824 in the section including the ellipse major axis 820 is 38°. Each trough 816 has a depth d of about 14.7 mm (0.58 inch) at its outlet and a substantially constant width w of 6.35 mm (0.25 inch) along its length. Adjacent troughs are spaced apart a dintance b of 12.7 mm (0.5 inch) at their outlets. The distance from the trough outlets to the catalyst face at the diffuser outlet 810 is 40.6 mm (1.6 inches).

Although in the embodiment shown in Figs. 20 - 22 the diffuser is shown as a conduit made from a single piece of sheet metal, it could be manufactured in other ways. For example, an adapter could be made for use with prior art catalytic converters having a smooth walled diffusion section. The adapter would be inserted into the prior art diffusion section to convert its internal flow surface to look exactly like the flow surface shown in Figs. 20 - 22. A catalytic converter system 900 with such an adaptor 902 in shown in cross-section in Fig. 26.

## Claims

1. Catalytic conversion system including a gas delivery conduit (802) having an outlet (808) of first cross-sectional flow area, a receiving conduit (804) having an inlet (810) of second cross-sectional flow area larger than said first cross-sectional flow area and spaced downstream of said delivery conduit outlet (808) and including a catalyst bed disposed therein, and an intermediate conduit defining a diffuser (806) having a flow surface connecting said outlet (808) to said inlet (810),

characterized in that said diffuser flow surface includes a plurality of downstream extending alternating, adjoining U-shaped troughs and ridges (816, 818) forming a smoothly undulating portion of said flow surface, said undulating portion terminating as a wave-shaped outlet edge, said troughs and ridges (816, 818) initiating with zero depth and height at said delivery conduit outlet (808) and increasing in depth and height to a maximum at said wave-shaped edge, and said troughs and ridges (816,818) being sized and contoured such that each trough (816) generates a pair of large-scale counterrotating vortices, each vortex rotating about an axis extending substantially in the downstream direction, and that at said wave-shaped edge there is a step-wise increase in cross-sectional flow area and said wave-shaped outlet edge is spaced upstream from said catalyst bed.

2. Catalytic conversion system according to claim 1, characterized in that said catalyst bed is a monolithic structure.

3. Catalytic conversion system according to claim 1, characterized in that each of said troughs (816) has a downstream extending floor which has a slope of no less than about 5° relative to the downstream direction.

4. Catalytic conversion system according to claim 3, characterized in that each of said ridges (818) has a downstream extending peak which is substantially parallel to the downstream direction.

5. Catalytic conversion system according to claim 3, characterized in that said delivery conduit outlet (808) is circular and said receiving conduit inlet (810) is elliptical, and that the depth dimension of said troughs (816) is substantially parallel to the major axis (820) of the elliptical inlet (810).

## Patentansprüche

1. Katalytisches Konvertersystem mit einem Gaszuführkanal (802), der einen Auslaß (808) mit einem ersten Durchflußquerschnitt hat, einem Empfangskanal (804), der einen Einlaß (810) mit einem zweiten Durchflußquerschnitt hat, welcher größer als der erste Durchflußquerschnitt ist, und stromabwärts von dem Zuführkanalauslaß (808) beabstandet ist und ein in ihm angeordnetes Katalysatorbett aufweist, und einem Zwischenkanal, der einen Diffusor (806) bildet, welcher eine Strömungsfläche hat, die den Auslaß (808) mit dem Einlaß (810) verbindet,
dadurch gekennzeichnet, daß die Diffusorströmungsfläche mehrere sich stromabwärts erstreckende, miteinander abwechselnde, aneinander angrenzende, U-förmige Senken und Rücken (816, 818) aufweist, welche einen gleichmäßig gewellten Teil der Strömungsfläche bilden, wobei der gewellte Teil in einem wellenförmigen Auslaßrand endet, wobei die Senken und Rücken (816, 818) mit der Tiefe bzw. Höhe null an dem Zuführkanalauslaß (808) beginnen und in der Tiefe bzw. Höhe bis zu einem Maximum an dem wellenförmigen Rand zunehmen und daß die Senken und Rücken (816, 818) so bemessen und konturiert sind, daß jede Senke (816) ein Paar großformatige gegenläufige Wirbel erzeugt, wobei sich jeder Wirbel um eine sich im wesentlichen in der stromabwärtigen Richtung erstreckende Achse dreht, und daß an dem wellenförmigen Rand eine stufenweise Vergrößerung des Durchflußquerschnittes erfolgt und daß der wellenförmige Auslaßrand stromaufwärts von dem Katalysatorbett beabstandet ist.

2. Katalytisches Konvertersystem nach Anspruch 1, dadurch gekennzeichnet, daß das Katalysatorbett ein monolithisches Gebilde ist.

3. Katalytisches Konvertersystem nach Anspruch 1, dadurch gekennzeichnet, daß jede Senke (816) eine sich stromabwärts erstreckende Sohle hat, welche eine Neigung von nicht weniger als 5° relativ zu der stromabwärtigen Richtung hat.

4. Katalytisches Konvertersystem nach Anspruch 3, dadurch gekennzeichnet, daß jeder Rücken (818) einen sich stromabwärts erstreckenden Scheitel hat, welcher im wesentlichen parallel zu der stromabwärtigen Richtung ist.

5. Katalytisches Konvertersystem nach Anspruch 3, dadurch gekennzeichnet, daß der Zuführkanalauslaß (808) kreisförmig und der Empfangskanaleinlaß (810) elliptisch ist, und daß die Tiefenabmessung der Senken (816) im wesentlichen parallel zu der großen Achse (820) des elliptischen Einlasses (810) ist.

## Revendications

1. Système de conversion catalytique comprenant une conduite d'échappement de gaz (802) ayant un orifice de sortie (808) à première aire d'écoulement en section transversale, une conduite réceptrice (804) ayant un orifice d'entrée (810) à seconde aire d'écoulement en section transversale plus grande que la première aire d'écoulement en section transversale, espacée en aval dudit orifice de sortie (808) de la conduite d'échappement, et comportant un lit catalytique qui y est disposé, et une conduite intermédiaire définissant un diffuseur (806) présentant une surface d'écoulement reliant ledit orifice de sortie (808) audit orifice d'entrée (810)
caractérisé en ce que la surface d'écoulement du diffuseur comprend plusieurs sillons et crêtes (816, 818) s'étendant vers l'aval alternés, adjacents et en forme de U formant une partie à ondulations douces de ladite surface d'écoulement, ladite partie ondulante se terminant selon un bord de sortie ondulé, lesdits sillons et crêtes (816, 818) commençant avec une profondeur nulle et une hauteur nulle à l'endroit de l'orifice de sortie (808) de la conduite d'échappement et augmentant en profondeur et en hauteur jusqu'à un maximum à l'endroit du bord ondulé, lesdits sillons et crêtes (816, 818) étant dimensionnés et conformés de telle sorte que chaque sillon (816) crée une paire de vortex à grande échelle à rotations inverses, chaque vortex tournant autour d'un axe s'étendant essentiellement dans la direction aval, en ce qu'à l'endroit du bord ondulé il y a un élargissement en épaulement ou gradin dans l'aire d'écoulement en section transversale, et en ce que le bord de sortie ondulé est espacé en amont du lit catalytique.

2. Système de conversion catalytique selon la revendication 1, caractérisé en ce que le lit catalytique est une structure monolithique.

3. Système de conversion catalytique selon la revendication 1, caractérisé en ce que chacun des sillons (816) présente un fond s'étendant vers l'aval qui présente une pente d'au moins 5 degrés par rapport à la direction aval.

4. Système de conversion catalytique selon la revendication 3 caractérisé en ce que chacune des crêtes présente un sommet, s'étendant vers l'aval, qui est sensiblement parallèle à la direction aval.

5. Système de conversion catalytique selon la revendication 3 caractérisé en ce que l'orifice de sortie (808) de la conduite d'échappement est circulaire et l'orifice d'entrée (810) de la conduite réceptrice est elliptique, et en ce que la dimension en profondeur des sillons (816) est sensiblement parallèle au grand axe (820) de l'orifice d'entrée elliptique (810).

FIG. 1

FIG. 2

FIG. 3

FIG. 4

FIG. 5

FIG. 6

FIG. 7

FIG. 8

FIG.9

FIG.10

EP 0 318 413 B1

FIG. 11

FIG.12

FIG. 13

FIG. 14

FIG. 15

FIG. 16

FIG. 17

FIG. 18

## FIG. 19

COEFICENT OF PERFORMANCE vs. AREA RATIO

EP 0 318 413 B1

FIG. 20

FIG. 21

FIG. 26

FIG. 22

EP 0 318 413 B1

*FIG.23*

$C_P$

.5
.4
.3
.2
.1
0

C

B

A

1.49          1.76

0          1.5          2.0

$J/H = A_O/A_I$

AT 2H DOWNSTREAM

*FIG.24*

$C_P$

.5
.4
.3
.2
.1
0

C

B

A

1.49          1.76

0          1.5          2.0

$J/H = A_O/A_I$

AT 3H DOWNSTREAM

*FIG.25*

$C_P$

.6
.5
.4
.3
.2
.1
0

C

B

A

1.49          1.76

0          1.5          2.0

$J/H = A_O/A_I$

AT 4.6H DOWNSTREAM

19